# EUROPEAN PATENT SPECIFICATION

(11) **EP 3 352 433 B1**
(45) Date of publication and mention of the grant of the patent: **02.10.2019**
(21) Application number: 17801324.9
(22) Date of filing: 09.03.2017
(51) Int. Cl.: H04L 29/08

(54) **NODE CONNECTION METHOD AND DISTRIBUTED COMPUTING SYSTEM**
KNOTENVERBINDUNGSVERFAHREN UND VERTEILTES RECHENSYSTEM
PROCÉDÉ DE CONNEXION DE NOEUD ET SYSTÈME INFORMATIQUE DISTRIBUÉ

(30) Priority: 28.11.2016 CN 201611060923
(43) Date of publication of application: 25.07.2018
(73) Proprietor: Wangsu Science & Technology Co., Ltd., Shanghai 200030 (CN)
(72) Inventor: CHEN, Qiuzhong, Shanghai 200030 (CN); LIU, Huaming, Shanghai (CN)
(74) Representative: Hanna Moore + Curley
(86) International application number: PCT/CN2017/076025
(87) International publication number: WO 2018/094909

(56) References cited:
- EP-A1- 1 197 863
- CN-A- 103 905 530
- CN-A- 104 636 076
- CN-A- 106 534 328
- US-A1- 2014 149 794
- US-A1- 2015 278 243
- ZENG, QUANJUN ET AL.: 'A Design Scheme of Redis Cluster Management' SCIENCEPAPER ONLINE 01 March 2014, pages 2 - 9, XP009506475

## Description

### FIELD OF THE DISCLOSURE

The present disclosure relates to the field of internet technology and, more particularly, relates to a node connection method and a distributed computing system.

### BACKGROUND

The in-memory database Redis (key-value database) is configured to support master-slave replication, and redis-sentinel (a service of Redis instance monitoring & managing, notification, and instance failover) is officially provided to perform master-slave monitoring and master-slave switching. However, because of the transfer of the master device, the Redis client may fail to be connected to the same ip address all the time. Currently, the known solutions use a method of integrating haproxy (a reverse proxy software)+keepalived (a service software to ensure high availability of the cluster in the cluster management)+sentinel. More specifically, keepalived provides vip (virtual ip) for the client to connect and manage haproxy failover, haproxy determines whether redis is the master device and is directly connected to the master device, and sentinel performs master-slave monitoring and master-slave switching on the redis.

The existing accelerating solution has two drawbacks:
1. The system in the solution is too complicated. Though one group of sentinel and haproxy may perform management on a plurality of Redis master-slave, one keepalived may only have one vip to map one Redis master-slave, and if a plurality of Redis master-slave need to be managed, a plurality of keepalived are needed. Further, if management is only performed on one Redis master-slave, the system cost may be too high.
2. The aforementioned solution results in an issue regarding the performance, and because all connections need to be forwarded via haproxy, for high-speed Redis, extra burden may be generated compared to the long waiting period of time of HAProxy.

The document EP 1197863 A1, discloses a cluster that implements a virtual disk system that provides each node of the cluster access to each storage device of the cluster. The virtual disk system provides availability such that a storage device may be accessed and data access requests are completed even in the presence of a failure.

The document US 2015/278243 A1 discloses a method wherein a client request, formatted in accordance with a file system interface, is received at an access subsystem of a distributed multi-tenant storage service. After the request is authenticated at the access subsystem, an atomic metadata operation comprising a group of file system metadata modifications is initiated, including a first metadata modification at a first node of a metadata subsystem of the storage service and a second metadata modification at a second node of the metadata subsystem.

Accordingly, there is provided a method, a system as detailed in the claims that follow.

### BRIEF SUMMARY OF THE DISCLOSURE

Technical issues to be solved by the present disclosure is to overcome the drawbacks of high cost and low efficiency of master-slave management in the existing distributed computing system. A node connection method and a distributed computing system are provided to reduce the system management cost, and improve the working efficiency of a client in the system as well as the master-slave changing speed of each server.

The present disclosure solves the aforementioned technical issues via the following technical solutions:

A node connection method is provided for a distributed computing system. The distributed computing system comprises a plurality of clients and a plurality of servers, where a server comprises a mapping table. The node connection method comprises:

Recording node information and a mapping relationship between nodes in a mapping table;

Visiting, by a client, a service side of the distributed computing system based on the node information;

Acquiring a target real node corresponding to the node information in the mapping table; and

Directly connecting the client to the target real node.

The present disclosure utilizes the mapping table of the server to store a mapping relationship. The node information comprises a node that the client needs to visit, and the node
may be a real node or may be a virtual node. The client searches for a corresponding target node in the mapping table based on the node information, and the target node is a real node. That is, when the node recorded in the node information is a virtual node, the client may, based on a real node corresponding to the virtual node in the mapping relationship, visit the real node. The server may be the third party, which is independent of the server used for calculation and storage.

The aforementioned distributed computing system realizes the concept of RedisProxy (Redis agency), and utilizes virtual node to agent real node. One redis cluster may have a plurality of redis nodes, where one master corresponds to a plurality of slaves. If a Redis cluster is treated as a virtual Redis node, when the RedisClient is connected to the redis server, whether the redis server is a cluster or a single instance may no longer need to be considered, which is friendly for the RedisClient.

The node connection method comprises:

Determining whether master-slave change exists in the distributed computing system, and if master-slave change exists in the distributed computing system, updating the mapping relationship between the nodes after change in the mapping table; and

Acquiring the target node corresponding to the node information via a latest mapping table.

The disclosed system may monitor the change in master-slave, and when a machine fault exists or a new machine is added, the system may make a response rapidly, thereby improving the working efficiency of the client in the system and the changing speed of master-slave in each server.

Preferably, the node includes a real node and a virtual node. The master-slave change includes adding a master-slave and master-slave switching in the distributed computing system. Further, determining whether a master-slave change exists in the distributed computing system comprises:
Determining whether the master-slave change is master-slave switching, and if the master-slave change is master-slave switching, switching a master node mapped to the virtual node to a previous slave node in the mapping table; or
Determining whether the master-slave change is adding a master-slave, and if the master-slave change is adding a master-slave, adding a node mapping relationship of a newly added master-slave in the mapping table;
Where the master node and the slave node are both real instances.

According to the present disclosure, master-slave switching refers to, after a fault downtime occurs at a master, a slave continues the master's work to allow the system to continue providing normal services. When such situation occurs, the mapping relationship in the mapping table changes, and the mapping table needs to replace the master node encountering an issue that corresponds to the virtual node with a slave node. After the client monitors a change in the mapping table, an updated slave node is connected.

Adding a master-slave refers to adding a new server in the original system, and when such situation occurs, the virtual node may be allocated to a real node in the newly added server, and the mapping relationship in the mapping table may also change. After the client monitors a change in the mapping table, an updated slave node is connected.

Monitoring of the master-slave may be realized via sentinel, and after the master-slave changes, the mapping table also changes. The client may determine whether the mapping table changes or not, and after the mapping relationship is determined to have changed, the client is connected to the latest accurate real node.

Preferably, acquiring the real node corresponding to the node information in the mapping table comprises:
Visiting, by the client, the mapping table; and
Determining, by the client, whether a to-be-visited node is a virtual node based on the node information, and if the to-be-visited node is a virtual node, acquiring and visiting a real node corresponding to the to-be-visited node in the mapping table, otherwise directly visiting the to-be-visited node.

Preferably, the node connection method further comprises:
After the client visits the real node, determining whether the visited real node changes or not by detecting the mapping table, and if the visited real node changes, the client is re-connected to the real node after change.

Preferably, the node information comprises information of a host name and a port number, and the client recognizes the to-be-visited node based on a naming rule of the host name and the port number.

The node name may be a combination of the host name and the port, such as host001:1, host001:2, and host002:1. The rule can be defined as follows: host01 may be virtual, host001 may be real (i.e., two digits may indicate a virtual redis host name), the master node is host001:1, and the slave node is host002:1.

Preferably, the distributed system comprises a sentinel terminal configured to monitor the master-slave change, the mapping table is recorded in zookeeper, and the node connection method comprises:
Determining, by the sentinel terminal, whether a master-slave change occurs, and if the master-slave change occurs, writing the mapping relationship after change into zookeeper via a notification script.

The present disclosure further provides a distributed computing system. The distributed computing system comprises a plurality of clients and a plurality of servers. A server comprises a mapping table, and the server further comprises a recording module. A client comprises a visiting module, an acquiring module, and a connecting module.

The recording module is configured to record node information and a mapping relationship between nodes in the mapping table;
The visiting module is configured to visit a service side of the distributed computing system based on the node information;
The acquiring module is configured to acquire a target node corresponding to the node information in the mapping table; and
The connecting module is configured to connect the target node.

The server further comprises a determining module and an updating module.

The determining module is configured to determine whether a master-slave change exists in the distributed computing system, and if a master-slave change exists in the distributed computing system, the updating module is invoked;
The updating module is configured to update the mapping relationship between nodes after change to the mapping table; and
The acquiring module is configured to acquire the target node corresponding to the node information via a latest mapping table.

Preferably, the node includes a real node and a virtual node. The master-slave change includes adding a master-slave and master-slave switching in the distributed computing system. Further, the server further comprises a processing module.

The determining module is further configured to determine whether the master-slave change is master-slave switching, and if the master-slave change is master-slave switching, the processing module is invoked; and

The processing module is configured to switch a node that is mapped to the virtual node to a previous slave node in the mapping table.

Or, the determining module is further configured to determine whether the master-slave change is adding a master-slave, and if the master-slave change is adding a master-slave, the processing module is invoked; and
The processing module is configured to add a node mapping relationship of the newly added master-slave in the mapping table;
Where the master node and the slave node are both real instances.

Preferably, the client comprises a recognizing module.

The recognizing module is configured to, after the client visits the mapping table, determine whether the to-be-visited node is a virtual node or not based on the node information. If the to-be-visited node is a virtual node, the recognizing module is configured to invoke the acquiring module to acquire and visit the real node corresponding to the to-be-visited node in the mapping table. If the to-be-visited node is not a virtual node, the recognizing module is configured to invoke the connecting module to directly visit the to-be-visited node.

Preferably, the client comprises a detecting module.

The detecting module is configured to, after the client visits the real node, determine whether the real node changes or not by detecting the mapping table, and if the real node changes, the client is re-connected to the real node after change.

The active and progressive effects of the present disclosure lie in that: the present disclosure may simplify the method of connecting the redis client to the redis server in the distributed computing system, reduce the system arrangement cost, and improve the performance of connection between the redis client and the redis server.

More specifically, the disclosed system and method no longer need to use the existing, conventional, and complicated keepalived and haproxy system, and a method of only sentinel and zookeeper may be used. The sentinel performs the same master-slave switching to write the master information into zookeeper via the notification script of the sentinel. Accordingly, not only the usage cost of the system may be reduced, but the efficiency may be improved.

### BRIEF DESCRIPTION OF THE DRAWINGS

To more clearly illustrate technical solutions in embodiments of the present disclosure, the accompanying drawings used for describing the embodiments are briefly introduced hereinafter. Obviously, the accompanying drawings in the following descriptions are only some embodiments of the present disclosure, and for those ordinarily skilled in the relevant art, other drawings may be obtained according to the accompanying drawings without creative labor.
FIG. 1 illustrates a partial schematic view of a distributed computing system according Embodiment 1;

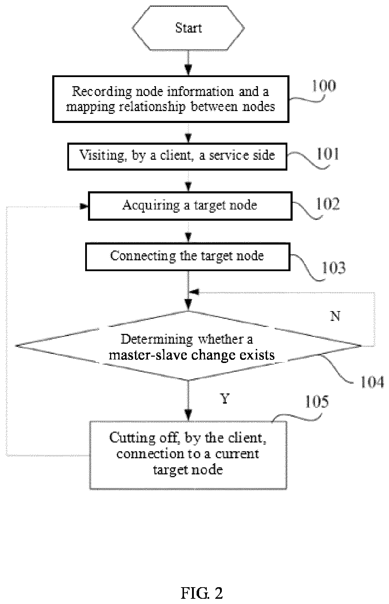

FIG. 2 illustrates a flow chart of a node connection method according to Embodiment 1; and
FIG. 3 illustrates a flow chart of a node connection method according to Embodiment 3.

### DETAILED DESCRIPTION

To make the object, technical solutions and advantages of the present disclosure more apparent, technical solutions in embodiments of the present disclosure will be described completely and fully hereinafter with reference to the accompanying drawings in embodiments of the present disclosure. Obviously, the described embodiments are a part of embodiments of the present disclosure, but not all embodiments. Based on the embodiments of the present disclosure, all other embodiments obtainable by those ordinarily skilled in the relevant art without contributing creative labor shall all fall within the protection range of the present disclosure.

### Embodiment 1

The present disclosure provides a distributed computing system. The distributed computing system comprises a plurality of clients and a plurality of servers. A server comprises a mapping table, and the mapping table is recorded in zookeeper of the server. The server further comprises a recording module, and a client comprises a visiting module, an acquiring module, a recognizing module, a detecting module, and a connecting module.

The recording module is configured to record node information and a mapping relationship between nodes in the mapping table.

The visiting module is configured to visit a service side of the distributed computing system based on the node information, and the node recorded in the node information may be a virtual node or may be a real node.

The recognizing module is configured to, after the client visits the mapping table, determine whether a to-be-visited node is a virtual node or not based on the node information. If the to-be-visited node is a virtual node, the acquiring module is invoked to acquire a real node corresponding to the to-be-visited node in the mapping table. if the to-be-visited node is not a virtual node, the connecting module is invoked to directly visit the to-be-visited node.

The connecting module is configured to visit the real node, and when the node in the node information is a virtual node, the real node (i.e., a target node) is acquired based on the mapping table. When the node in the node information is a real node, the connecting module is directly connected to the target node.

The node information comprises information of a host name and a port number, and the client may recognize the to-be-visited node based on a naming rule of the host name and the port number.

The node name in the node information may be a combination of the host name and the port, such as host001:1, host001:2, and host002:1. The rule can be defined as follows: host01 may be virtual, host001 may be real (i.e., two digits may indicate a virtual redis host name), the master node is host001:1, and the slave node is host002:1.

Via the node name, whether the node included in the node information is a real node or a virtual node may be determined.

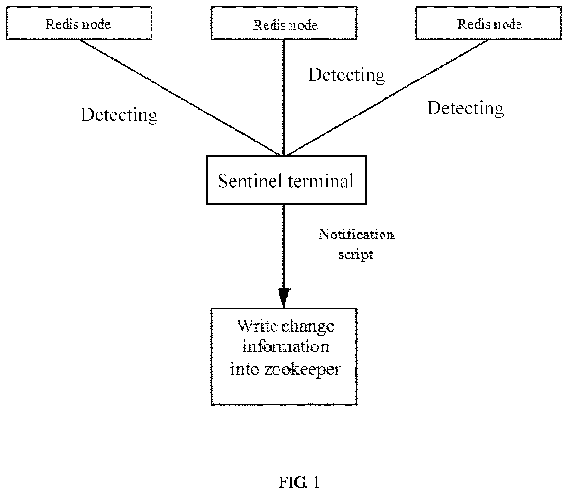

Referring to FIG. 1, in one embodiment, the server has a sentinel function. That is, the server comprises a sentinel terminal configured to monitor the master-slave change, and the sentinel terminal comprises a determining module and a processing module.

The determining module is configured to determine whether master-slave switching exists in the distributed computing system, and if master-slave switching exists in the distributed computing system, the processing module is invoked.

The processing module is configured to, in the mapping table, switch the node that is mapped to the virtual node to a previous slave node. After the master goes down, the virtual node needs to correspond to the node in the slave.

Further, the master node and the slave node may be both real instances.

The sentinel terminal writes the corresponding relationship into zookeeper via the notification script.

The detecting module is configured to, after the client visits the real node, determine whether the real node changes or not by detecting the mapping table of zookeeper, and if the real node changes, the client is re-connected to the real node after change.

By utilizing the aforementioned distributed computing system, the present disclosure further provides a node connection method, and the node connection method comprises:
Step 100, recording node information and a mapping relationship between nodes in the mapping table.

The node information comprises information of a host name and a port number, and the client may recognize a to-be-visited node based on a naming rule of the host name and the port number.

The node name in the node information may be a combination of the host name and the port, such as host001:1, host001:2, and host002:1. The rule can be defined as follows: the host01 may be virtual, the host001 may be real (i.e., two digits may indicate a virtual redis host name), the master node is host001:1, and the slave node is host002:1.

Step 101, visiting, by the client, a service side of the distributed computing system based on the node information.

Step 102, acquiring a target node corresponding to the node information in the mapping table.

Step 103, connecting the client to the target node.

The client may determine whether the visited node is a real node or a virtual node based on the node information. The client visits the mapping table, and if the visited node is a virtual node, the client may acquire and visit the real node corresponding to the to-be-visited node in the mapping table, and if the visited node is a real node, the client may directly visit the to-be-visited node.

Step 104, detecting, by the client, Zookeeper at the service side to determine whether a master-slave change exists. If the master-slave change exists, Step 105 is executed, and if the master-slave change does not exist, Step 104 is once again executed.

Step 105, cutting off, by the client, connection to a current target node, and returning to Step 102.

The master-slave change comprises master-slave switching and adding a master-slave. When the master-slave switches, the disclosed method switches, in the mapping table, the node that is mapped to the virtual node to a previous slave node. That is, after the master goes down, the virtual node needs to correspond to the node in the slave.

When a new master-slave is added, the disclosed method adds a node mapping relationship of the newly added master-slave in the mapping table, and the client may be connected to the updated node based on the node information and the new mapping table.

The client notices whether the visited real node changes or not by detecting the mapping table, and if the visited real node changes, the client is re-connected to the real node after change.

The disclosed node connection method and distributed computing system may simplify the system structure of the distributed computing system, reduce the system management cost, and improve the client working efficiency in the system and the master-slave changing speed in each server.

### Embodiment 2

Embodiment 2 is similar to Embodiment 1, and the difference lies in that:
The determining module is configured to determine whether a newly added master-slave exists in the distributed computing system, and if a newly added master-slave exists in the distributed computing system, the processing module is invoked; and
The processing module is configured to add the node mapping relationship of the newly added master-slave in the mapping table.

By utilizing the aforementioned distributed computing system, the disclosed node connection method differs from Embodiment 1 in that:
Determining whether the master-slave change is adding a master-slave, and if the master-slave change is adding a master-slave, adding the node mapping relationship of the newly added master-slave in the mapping table;
Where the master node and the slave node are both real instances.

The disclosed node connection method and distributed computing system may simplify the system structure of the distributed computing system, reduce the system management cost, and improve the client working efficiency in the system and the master-slave changing speed in each server.

### Embodiment 3

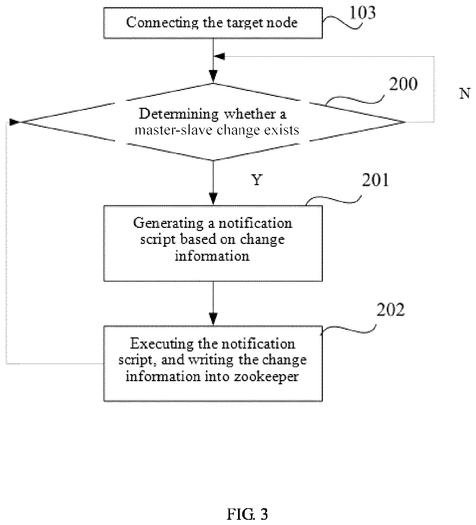

Referring to FIG. 3, the disclosed embodiment is similar to Embodiment 1, where the difference lies in that:

After Step 103, the following steps are included:
Step 200, monitoring, by sentinel, whether a master-slave change exists in the distributed computing system, if a master-slave change exists in the distributed computing system, Step 201 is executed, and if a master-slave change does not exist in the distributed computing system, Step 200 is once again executed.
Step 201, generating a notification script based on change information.
Step 202, executing the notification script, writing the change information into zookeeper, and once again executing Step 200.

Embodiment 3 is further optimized based on Embodiment 1, and when the master-slave change occurs, the client cuts off the current connection and is connected to the newest node based on the mapping table. On the other hand, the service side may update the information of the master-slave change and write the change information into zookeeper.

The device embodiments described above are for illustrative purposes only, and the units illustrated as separate parts may be or may not be physically separated. The parts illustrated as units may be or may not be physical units. That is, the parts may be located in a same place, or distributed to a plurality of network units. A part of or all modules thereof may be selected to realize the object of solutions of the present disclosure based on the actual demand. Those ordinarily skilled in the relevant art may understand and implement the present disclosure without contributing creative labor.

Via the descriptions of the aforementioned embodiments, those skilled in the relevant art may clearly understand that each embodiment may be implemented using software and an essential universal hardware platform, or via the hardware. Based on such understanding, the nature of the aforementioned technical solutions or the part of the aforementioned technical solutions that contributes to the existing technique may be embodied in a form of software products. Such computer software product may be stored in a computer readable storage medium, such as ROM/RAM, magnetic disc, and optical disc, etc., that comprises a plurality of commands configured to allow a computing device (e.g., a personal computer, a server, or a network device, etc.) to execute each embodiment or methods described in some parts of the embodiments.

## Claims

1. A node connection method applied to a distributed computing system, the distributed computing system comprising a plurality of clients and a plurality of servers, wherein a server comprises a mapping table, and the node connection method comprising:
recording (100) node information and a mapping relationship between nodes in the mapping table;
visiting (101), by a client, a service side of the distributed computing system based on the node information;
acquiring (102), by the client, a target real node corresponding to the node information in the mapping table; and
directly connecting (103), by the client, to the target real node,
wherein the node connection method further comprising:
determining (104; 200) whether a master-slave change exists in the distributed computing system, when the master-slave change exists, updating a changed mapping relationship between nodes to the mapping table, where the mapping relationship is changed after a fault downtime occurs at a master; and
acquiring the target real node corresponding to the node information through a latest mapping table.

2. The node connection method according to claim 1, wherein the nodes includes a real node and a virtual node, the master-slave change includes adding a group of master-slave and master-slave switching in the distributed computing system, and determining whether the master-slave change exists in the distributed computing system comprises:
determining whether the master-slave change is master-slave switching, and when the master-slave change is the master-slave switching, switching, in the mapping table, a master node that is mapped to the virtual node to a previous slave node; or
determining whether the master-slave change is adding a group of master-slave, and when the master-slave change is adding the group of master-slave, adding a node mapping relationship of the newly added group of master-slave in the mapping table,
wherein the master node and the slave node are both real instances.

3. The node connection method according to claim 1, wherein acquiring the real node corresponding to the node information in the mapping table further comprises:
visiting, by the client, the mapping table; and
determining, by the client, whether a to-be-visited node is a virtual node based on the node information, when the to-be-visited node is a virtual node, acquiring and visiting a real node corresponding to the to-be-visited node in the mapping table, and when the to-be-visited node is not a virtual node, visiting the to-be-visited node directly.

4. The node connection method according to claim 3, further comprising:
after visiting the real node, determining, by the client, whether the visited real node is changed or not by detecting the mapping table, and when the visited real node is changed, re-connecting to the real node after change.

5. The node connection method according to claim 1, wherein the node information comprises information of a host name and a port number, and the client recognizes the to-be-visited node based on a naming rule of the host name and the port number.

6. The node connection method according to claim 1, wherein the distributed computing system comprises a sentinel terminal configured to monitor a master-slave change, the mapping table is recorded in zookeeper, and the node connection method comprises:
Determining (200), by the sentinel terminal, whether the master-slave change occurs, and when the master-slave change occurs, writing a mapping relationship after change to zookeeper via a notification script (201, 202).

7. A distributed computing system, comprising a plurality of clients and a plurality of servers, wherein a server includes a mapping table, the server further includes a recording module, and a client includes a visiting module, an acquiring module, and a connecting module, Wherein:
the recording module is configured to record node information and a mapping relationship between nodes in the mapping table;
the visiting module is configured to visit a service side of the distributed computing system based on the node information;
the acquiring module is configured to acquire a target real node corresponding to the node information in the mapping table; and
the connecting module is configured to connect to the target real node,
wherein the server further comprises a determining module and an updating module,
the determining module is configured to determine whether a master-slave change exists in the distributed computing system, and when the master-slave change exists in the distributed computing system, the updating module is invoked;
the updating module is configured to update a changed mapping relationship between nodes after change to the mapping table, where the mapping relationship is changed after a fault downtime occurs at a master; and
the acquiring module is configured to acquire the target real node corresponding to the node information via a latest mapping table.

8. The distributed computing system according to claim 7, wherein the nodes includes a real node and a virtual node, the master-slave change includes adding a group of master-slave and master-slave switching in the distributed computing system, and the server further comprises a processing module,
the determining module is further configured to determine whether the master-slave change is the master-slave switching or not, and when the master-slave change is the master-slave switching, the processing module is invoked; and
the processing module is configured to switch, in the mapping table, a node that is mapped to the virtual node to a previous slave node,
or,
the determining module is further configured to determine whether the master-slave change is adding the group of master-slave, and when the master-slave change is adding the group of master-slave, the processing module is invoked; and
the processing module is configured to add a node mapping relationship of a newly added group of master-slave in the mapping table,
wherein the master node and the slave node are both real instances.

9. The distributed computing system according to claim 7, wherein the client comprises a recognizing module,
the recognizing module is configured to, after the client visited the mapping table, determine whether a to-be-visited node is a virtual node or not based on the node information, when the to-be-visited node is a virtual node, the acquiring module is invoked to acquire and visit a real node corresponding to the to-be-visited node in the mapping table, and when the to-be-visited node is not a virtual node, the connecting module is invoked to visit the to-be-visited node directly.

10. The distributed computing system according to claim 9, wherein the client comprises a detecting module,
the detecting module is configured to, after the client connects to the real node, determine whether the real node changes or not by detecting the mapping table, and when the real node changes, re-connecting the real node after change.

## Patentansprüche

1. Knotenverbindungsverfahren, das auf ein verteiltes Computersystem angewendet wird, wobei das verteilte Computersystem eine Vielzahl von Clients und eine Vielzahl von Servern umfasst, wobei ein Server eine Zuordnungstabelle umfasst und das Knotenverbindungsverfahren umfassend:
Aufzeichnen (100) von Knoteninformationen und einer Zuordnungsbeziehung zwischen Knoten in der Zuordnungstabelle;
Besuchen (101) einer Serviceseite des verteilten Computersystems durch einen Client, basierend auf den Knoteninformationen;
Erfassen (102) eines realen Zielknotens, der den Knoteninformationen in der Zuordnungstabelle entspricht, durch den Client; und
direktes Verbinden (103) mit dem realen Zielknoten durch den Client,
wobei das Knotenverbindungsverfahren ferner umfasst:
Ermitteln (104; 200), ob eine Master-Slave-Änderung in dem verteilten Computersystem vorhanden ist, wenn die Master-Slave-Änderung vorhanden ist, Aktualisieren einer geänderten Zuordnungsbeziehung zwischen Knoten in der Zuordnungstabelle, wobei die Zuordnungsbeziehung geändert wird, nachdem eine Störungsausfallzeit an einem Master auftritt; und
Erfassen des realen Zielknotens, der den Knoteninformationen entspricht, durch eine aktuelle Zuordnungstabelle.

2. Knotenverbindungsverfahren nach Anspruch 1, wobei die Knoten einen realen Knoten und einen virtuellen Knoten beinhalten, die Master-Slave-Änderung das Hinzufügen einer Gruppe aus Master-Slave und Master-Slave-Umschaltung in dem verteilten Computersystem beinhaltet, und das Ermitteln, ob die Master-Slave-Änderung in dem verteilten Computersystem vorhanden ist, umfasst:
Ermitteln, ob die Master-Slave-Änderung eine Master-Slave-Umschaltung ist, und wenn die Master-Slave-Änderung die Master-Slave-Umschaltung ist, Umschalten eines Master-Knotens in der Zuordnungstabelle, der dem virtuellen Knoten zugeordnet ist, zu einem vorherigen Slave-Knoten; oder
Ermitteln, ob die Master-Slave-Änderung eine Gruppe von Master-Slave hinzufügt, und wenn die Master-Slave-Änderung die Gruppe von Master-Slave hinzufügt, Hinzufügen einer Knotenzuordnungsbeziehung der neu hinzugefügten Gruppe von Master-Slave in der Zuordnungstabelle,
wobei der Master-Knoten und der Slave-Knoten beide reale Instanzen sind.

3. Knotenverbindungsverfahren nach Anspruch 1, wobei das Erfassen des realen Knotens, der den Knoteninformationen in der Zuordnungstabelle entspricht, ferner umfasst:
Besuchen der Zuordnungstabelle durch den Client; und
Ermitteln durch den Client, ob ein zu besuchender Knoten ein virtueller Knoten ist, basierend auf den Knoteninformationen, wenn der zu besuchende Knoten ein virtueller Knoten ist, Erfassen und Besuchen eines realen Knotens, der dem zu besuchenden Knoten in der Zuordnungstabelle entspricht, und wenn der zu besuchende Knoten kein virtueller Knoten ist, direktes Besuchen des zu besuchenden Knotens.

4. Knotenverbindungsverfahren nach Anspruch 3, ferner umfassend:
nach dem Besuchen des realen Knotens Ermitteln durch den Client, ob der besuchte reale Knoten geändert ist oder nicht durch Erfassen der Zuordnungstabelle, und wenn der besuchte reale Knoten geändert ist, erneutes Verbinden mit dem realen Knoten nach der Änderung.

5. Knotenverbindungsverfahren nach Anspruch 1, wobei die Knoteninformationen Informationen eines Host-Namens und einer Portnummer umfassen und der Client den zu besuchenden Knoten basierend auf einer Benennungsregel des Host-Namens und der Portnummer erkennt.

6. Knotenverbindungsverfahren nach Anspruch 1, wobei das verteilte Computersystem ein Merker-Endgerät umfasst, das konfiguriert ist, um eine Master-Slave-Änderung zu überwachen, wobei die Zuordnungstabelle in Zookeeper aufgezeichnet wird, und das Knotenverbindungsverfahren umfasst:
Ermitteln (200) durch das Merker-Endgerät, ob die Master-Slave-Änderung auftritt, und wenn die Master-Slave-Änderung auftritt, Schreiben einer Zuordnungsbeziehung nach der Änderung in Zookeeper über ein Benachrichtigungsskript (201, 202).

7. Verteiltes Computersystem, umfassend eine Vielzahl von Clients und eine Vielzahl von Servern, wobei ein Server eine Zuordnungstabelle beinhaltet, der Server ferner ein Aufzeichnungsmodul beinhaltet und ein Client ein Besuchsmodul, ein Erfassungsmodul und ein Verbindungsmodul beinhaltet, wobei:
das Aufzeichnungsmodul konfiguriert ist, um Knoteninformationen und eine Zuordnungsbeziehung zwischen Knoten in der Zuordnungstabelle aufzuzeichnen;
das Besuchsmodul konfiguriert ist, um eine Serviceseite des verteilten Computersystems basierend auf den Knoteninformationen zu besuchen;
das Erfassungsmodul konfiguriert ist, um einen realen Zielknoten zu erfassen, der den Knoteninformation in der Zuordnungstabelle entspricht; und
das Verbindungsmodul konfiguriert ist, um sich mit dem realen Zielknoten zu verbinden,
wobei der Server ferner ein Ermittlungsmodul und ein Aktualisierungsmodul umfasst,
das Ermittlungsmodul konfiguriert ist, um zu ermitteln, ob eine Master-Slave-Änderung in dem verteilten Computersystem vorhanden ist, und wenn die Master-Slave-Änderung in dem verteilten Computersystem vorhanden ist, wird das Aktualisierungsmodul aufgerufen;
das Aktualisierungsmodul konfiguriert ist, um eine geänderte Zuordnungsbeziehung zwischen Knoten nach der Änderung in der Zuordnungstabelle zu aktualisieren, wobei die Zuordnungsbeziehung geändert wird, nachdem eine Störungsausfallzeit an einem Master auftritt; und
das Erfassungsmodul konfiguriert ist, um den realen Zielknoten zu erfassen, der den Knoteninformation in der Zuordnungstabelle entspricht.

8. Verteiltes Computersystem nach Anspruch 7, wobei die Knoten einen realen Knoten und einen virtuellen Knoten beinhalten, die Master-Slave-Änderung das Hinzufügen einer Gruppe aus Master-Slave und Master-Slave-Umschaltung in dem verteilten Computersystem beinhaltet und der Server ferner ein Verarbeitungsmodul umfasst,
das Ermittlungsmodul ferner konfiguriert ist, um zu ermitteln, ob die Master-Slave-Änderung die Master-Slave-Umschaltung ist oder nicht, und wenn die Master-Slave-Änderung die Master-Slave-Umschaltung ist, wird das Verarbeitungsmodul aufgerufen; und
das Verarbeitungsmodul konfiguriert ist, um in der Zuordnungstabelle einen Knoten, der dem virtuellen Knoten zugeordnet ist, auf einen vorherigen Slave-Knoten umzuschalten,
oder
das Ermittlungsmodul ferner konfiguriert ist, um zu ermitteln, ob die Master-Slave-Änderung die Gruppe aus Master-Slave hinzufügt, und wenn die Master-Slave-Änderung die Gruppe aus Master-Slave hinzufügt, wird das Verarbeitungsmodul aufgerufen; und
das Verarbeitungsmodul konfiguriert ist, um eine Knotenzuordnungsbeziehung einer neu hinzugefügten Gruppe aus Master-Slave in der Zuordnungstabelle hinzuzufügen,
wobei der Master-Knoten und der Slave-Knoten beide reale Instanzen sind.

9. Verteiltes Computersystem nach Anspruch 7, wobei der Client ein Erkennungsmodul umfasst,
das Erkennungsmodul konfiguriert ist, um, nachdem der Client die Zuordnungstabelle besucht hat, basierend auf den Knoteninformationen zu ermitteln, ob ein zu besuchender Knoten ein virtueller Knoten ist oder nicht, wenn der zu besuchende Knoten ein virtueller Knoten ist, wird das Erfassungsmodul aufgerufen, um einen realen Knoten, der dem zu besuchenden Knoten in der Zuordnungstabelle entspricht, zu erfassen und zu besuchen, und wenn der zu besuchende Knoten kein virtueller Knoten ist, wird das Verbindungsmodul aufgerufen, um den zu besuchenden Knoten direkt zu besuchen.

10. Verteiltes Computersystem nach Anspruch 9, wobei der Client ein Erfassungsmodul umfasst,
das Erfassungsmodul konfiguriert ist, um, nachdem der Client sich mit dem realen Knoten verbunden hat, durch Erfassen der Zuordnungstabelle zu ermitteln, ob der reale Knoten geändert ist oder nicht, und wenn der reale Knoten sich ändert, erneutes Verbinden des realen Knotens nach der Änderung.

## Revendications

1. Procédé de connexion à un noeud appliqué à un système informatique distribué, le système informatique distribué comprenant une pluralité de clients et une pluralité de serveurs, un serveur comprenant une table de mappage, et le procédé de connexion à un noeud comprenant :
enregistrer (100) des informations de noeud et une relation de mappage entre des noeuds dans la table de mappage ;
visiter (101), par un client, un côté service du système informatique distribué sur la base des informations de noeud ;
acquérir (102), par le client, un noeud réel cible correspondant aux informations de noeud dans la table de mappage ; et
se connecter directement (103), par le client, au noeud réel cible,
le procédé de connexion à un noeud comprenant en outre :
déterminer (104 ; 200) si un changement maître-esclave existe ou non dans le système informatique distribué, lorsque le changement maître-esclave existe, mettre à jour une relation de mappage changée entre des noeuds dans la table de mappage, la relation de mappage étant changée après qu'un temps d'arrêt de défaillance se produit au niveau d'un maître ; et
acquérir le noeud réel cible correspondant aux informations de noeud par l'intermédiaire d'une table de mappage la plus récente.

2. Procédé de connexion à un noeud selon la revendication 1, dans lequel les noeuds comprennent un noeud réel et un noeud virtuel, le changement maître-esclave comprend l'ajout d'un groupe de maître-esclave et une commutation maître-esclave dans le système informatique distribué, et la détermination du point de savoir si le changement maître-esclave existe ou non dans le système informatique distribué comprend :
déterminer si le changement maître-esclave est ou non une commutation maître-esclave, et lorsque le changement maître-esclave est une commutation maître-esclave, commuter, dans la table de mappage, un noeud maître qui est mappé au noeud virtuel en un noeud esclave précédent ; ou
déterminer si le changement maître-esclave ajoute ou non un groupe de maître-esclave, et lorsque le changement maître-esclave ajoute le groupe de maître-esclave, ajouter une relation de mappage de noeud du groupe de maître-esclave nouvellement ajouté dans la table de mappage,
le noeud maître et le noeud esclave étant tous les deux des instances réelles.

3. Procédé de connexion à un noeud selon la revendication 1, dans lequel l'acquisition du noeud réel correspondant aux informations de noeud dans la table de mappage comprend en outre :
visiter, par le client, la table de mappage ; et
déterminer, par le client, si un noeud à visiter est ou non un noeud virtuel sur la base des informations de noeud, lorsque le noeud à visiter est un noeud virtuel, acquérir et visiter un noeud réel correspondant au noeud à visiter dans la table de mappage, et lorsque le noeud à visiter n'est pas un noeud virtuel, visiter directement le noeud à visiter.

4. Procédé de connexion à un noeud selon la revendication 3, comprenant en outre :
après la visite du noeud réel, déterminer, par le client, si le noeud réel visité est ou non changé par détection de la table de mappage, et lorsque le noeud réel visité est changé, se reconnecter au noeud réel après le changement.

5. Procédé de connexion à un noeud selon la revendication 1, dans lequel les informations de noeud comprennent des informations d'un nom d'hôte et d'un numéro de port, et le client reconnaît le noeud à visiter sur la base d'une règle de nommage du nom d'hôte et du numéro de port.

6. Procédé de connexion à un noeud selon la revendication 1, dans lequel le système informatique distribué comprend un terminal drapeau configuré pour surveiller un changement maître-esclave, la table de mappage est enregistrée dans zookeeper, et le procédé de connexion à un noeud comprend :
déterminer (200), par le terminal drapeau, si le changement maître-esclave se produit ou non, et lorsque le changement maître-esclave se produit, écrire une relation de mappage après le changement dans zookeeper par l'intermédiaire d'un script de notification (201, 202).

7. Système informatique distribué, comprenant une pluralité de clients et une pluralité de serveurs, un serveur comprenant une table de mappage, le serveur comprenant en outre un module d'enregistrement, et un client comprenant un module de visite, un module d'acquisition et un module de connexion ;
le module d'enregistrement étant configuré pour enregistrer des informations de noeud et une relation de mappage entre des noeuds dans la table de mappage ;
le module de visite étant configuré pour visiter un côté service du système informatique distribué sur la base des informations de noeud ;
le module d'acquisition étant configuré pour acquérir un noeud réel cible correspondant aux informations de noeud dans la table de mappage ; et
le module de connexion étant configuré pour se connecter au noeud réel cible,
le serveur comprenant en outre un module de détermination et un module de mise à jour,
le module de détermination étant configuré pour déterminer si un changement maître-esclave existe ou non dans le système informatique distribué, et lorsque le changement maître-esclave existe dans le système informatique distribué, le module de mise à jour étant invoqué ;
le module de mise à jour étant configuré pour mettre à jour une relation de mappage changée entre des noeuds après le changement dans la table de mappage, la relation de mappage étant changée après qu'un temps d'arrêt de défaillance se produit au niveau d'un maître ; et
le module d'acquisition étant configuré pour acquérir le noeud réel cible correspondant aux informations de noeud par l'intermédiaire d'une table de mappage la plus récente.

8. Système informatique distribué selon la revendication 7, dans lequel les noeuds comprennent un noeud réel et un noeud virtuel, le changement maître-esclave comprend l'ajout d'un groupe de maître-esclave et une commutation maître-esclave dans le système informatique distribué, et le serveur comprend en outre un module de traitement,
le module de détermination est en outre configuré pour déterminer si le changement maître-esclave est ou non la commutation maître-esclave, et lorsque le changement maître-esclave est la commutation maître-esclave, le module de traitement est invoqué ; et
le module de traitement est configuré pour commuter, dans la table de mappage, un noeud qui est mappé au noeud virtuel en un noeud esclave précédent,
ou,
le module de détermination est en outre configuré pour déterminer si le changement maître-esclave ajoute ou non le groupe de maître-esclave, et lorsque le changement maître-esclave ajoute le groupe de maître-esclave, le module de traitement est invoqué ; et
le module de traitement est configuré pour ajouter une relation de mappage de noeud d'un groupe de maître-esclave nouvellement ajouté dans la table de mappage,
le noeud maître et le noeud esclave étant tous les deux des instances réelles.

9. Système informatique distribué selon la revendication 7, dans lequel le client comprend un module de reconnaissance,
le module de reconnaissance est configuré pour, après la visite de la table de mappage par le client, déterminer si un noeud à visiter est ou non un noeud virtuel sur la base des informations de noeud, lorsque le noeud à visiter est un noeud virtuel, le module d'acquisition est invoqué pour acquérir et visiter un noeud réel correspondant au noeud à visiter dans la table de mappage, et lorsque le noeud à visiter n'est pas un noeud virtuel, le module de connexion est invoqué pour visiter directement le noeud à visiter.

10. Système informatique distribué selon la revendication 9, dans lequel le client comprend un module de détection,
le module de détection est configuré pour, après que le client se connecte au noeud réel, déterminer si le noeud réel change ou non par détection de la table de mappage, et lorsque le noeud réel change, se reconnecter au noeud réel après le changement.
